# EUROPÄISCHE PATENTANMELDUNG

(11) **EP 3 964 372 A1**
(43) Veröffentlichungstag der Anmeldung: **09.03.2022**
(21) Anmeldenummer: 20194403.0
(22) Anmeldetag: 03.09.2020
(51) Int. Cl.: B60H 1/00, B29C 49/00

(54) **ROHRANORDNUNG FÜR DEN TRANSPORT VON TEMPERIERMEDIEN**

(71) Anmelder: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE)
(74) Vertreter: Reiser & Partner Patentanwälte mbB

(57) **Zusammenfassung**

Rohranordnung (1) für den Transport von Temperiermedien, umfassend einen mittels Blasformen hergestellten Grundkörper (2), aus welchem zumindest ein erster Kanal (3) und ein zweiter Kanal (4) ausgebildet sind, wobei der erste Kanal (3) und der zweite Kanal (4) derart in dem Grundkörper (2) geführt sind, dass sich der erste Kanal (3) und der zweite Kanal (4) zumindest in einem Abschnitt (5) überkreuzen.

## Beschreibung

Die Erfindung betrifft eine Rohranordnung für den Transport von Temperiermedien, umfassend einen mittels Blasformen hergestellten Grundkörper, aus welchem zumindest ein erster Kanal und ein zweiter Kanal ausgebildet ist.

Temperiermedien werden beispielsweise in der Elektromobilität benötigt. Akkumulatoren von Elektrofahrzeugen, insbesondere Lithium-Ionen-Akkumulatoren, weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welchen Temperiermedien zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren, insbesondere zu kühlen. Hierzu gehören neben dem Akkumulator die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum autonomen Fahren ausgerüstet, werden leistungsfähige Sensoren und leistungsfähige Rechner benötigt, wobei die Systeme redundant vorhanden sind. Dadurch, dass der Bauraum in einem Fahrzeug beschränkt ist, ergeben sich auch bei diesen Systemen besondere Anforderungen an eine Temperiereinrichtung zur Temperierung dieser Komponenten.

Temperiermedien kommen ferner in Klimaanlagen zum Einsatz. Klimaanlagen, insbesondere mobile Klimaanlagen, umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Kraftfahrzeugen, ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyceln.

In allen Anwendungen besteht häufig die Anforderung, dass die Rohranordnung besonders kompakt sein soll. Dabei kann es vorkommen, dass über die Kanäle Aggregate mit Medium versorgt werden sollen, welche räumlich verschieden angeordnet sein können, wobei sich die Notwendigkeit einer gekreuzten, mit erhöhtem Bauraumbedarf einhergehende, Leitungsführung ergeben kann. Dementsprechend kann sich durch gekreuzte Leitungsführung eine voluminöse Rohranordnung mit erhöhtem Bauraumbedarf ergeben.

Der Erfindung liegt die Aufgabe zugrunde, eine Rohranordnung bereitzustellen, welche einen besonders geringen Bauraumbedarf aufweist.

Diese Aufgabe wird mit den Merkmalen von Anspruch 1 gelöst. Auf vorteilhafte Ausgestaltungen nehmen die Unteransprüche Bezug.

Die erfindungsgemäße Rohranordnung für den Transport von Temperiermedien umfasst einen mittels Blasformen hergestellten Grundkörper, aus welchem zumindest ein erster Kanal und ein zweiter Kanal ausgebildet ist, wobei der erste Kanal und der zweite Kanal derart in dem Grundköper geführt sind, dass sich der erste Kanal und der zweite Kanal zumindest in einem Abschnitt überkreuzen.

Die erfindungsgemäße Rohranordnung besteht aus einem mittels Blasformen hergestellten Grundkörper. Durch das Blasformen ist es möglich, einen Grundkörper mit einer komplexen Gestalt herzustellen. Dementsprechend kann der Grundkörper mehrere Kanäle umfassen, welche in der für den Montageort erforderlichen Gestalt geformt, beispielsweise gekrümmt, sein können. Des Weiteren besteht eine große Freiheit in der Wahl der Querschnittsform des Kanals. Bei der erfindungsgemäßen Rohranordnung erfolgt die Kanalführung darüber hinaus derart, dass sich der erste Kanal und der zweite Kanal zumindest in einem Abschnitt überkreuzen. Derartige Kreuzungsabschnitte erfordern üblicherweise besonders viel Bauraum. Des Weiteren ist der Montageaufwand besonders groß, wenn der Kreuzungsabschnitt aus einzelnen Rohren ausgebildet ist. Bei der erfindungsgemäßen Ausgestaltung ist der Abschnitt mit den sich kreuzenden Kanälen im Blasformverfahren aus dem Grundkörper ausgebildet. Dadurch ist es möglich, die Rohranordnung besonders kostengünstig herzustellen und darüber hinaus ist es möglich, dem Kreuzungsabschnitt eine platzsparende Geometrie zu verleihen.

Prinzipiell ist dabei denkbar, dass mehrere einander überkreuzende Kanäle vorgesehen sind. Beispielsweise können zwei parallel zueinander verlaufende Kanäle einen dritten Kanal oder zwei weitere parallel zueinander verlaufende Kanäle überkreuzen.

Als Material für die Rohranordnung kommen vorzugsweise Kunststoffe wie thermoplastische Polymere, thermoplastische Elastomere zum Einsatz. In Abhängigkeit der Druckverhältnisse in den in der Rohranordnung transportierten Medien kann die Rohranordnung einschichtig, aber auch mehrschichtig ausgebildet sein.

Vorzugsweise sind der erste Kanal und der zweite Kanal in dem Abschnitt bogenförmig geführt. Dadurch können abrupte Richtungswechsel vermieden werden, was den Strömungswiderstand des in den Kanälen geführten Mediums reduziert.

Der erste Kanal und der zweite Kanal können in dem Abschnitt in Form eines S-Bogens geführt sein. Bei dieser Ausgestaltung ergibt sich ein besonders geringer Strömungswiderstand. Der erste Kanal und der zweite Kanal können in dem Abschnitt einen Querschnitt aufweisen, der sich von den übrigen Querschnitten der Rohranordnung unterscheidet. Beispielsweise kann der Querschnitt der Kanäle in dem Abschnitt so gewählt werden, dass sich in diesem Bereich eine besonders platzsparende Geometrie der beiden Kanäle ergibt. Es ist aber auch denkbar, dass die Ausgestaltung der Kanäle in dem Abschnitt strömungsoptimiert ist, so dass die Kanäle in diesem Bereich einen besonders geringen Strömungswiderstand aufweisen.

Vorzugsweise sind der erste Kanal und der zweite Kanal in dem Abschnitt abgeflacht. Dabei können der erste Kanal und der zweite Kanal an zwei einander gegenüberliegenden Seiten abgeflacht sein. Alternativ ist auch denkbar, dass die beiden Kanäle im Abschnitt, im Querschnitt betrachtet, im Wesentlichen rechteckig ausgebildet sind. Dadurch ist es möglich, dass die Rohranordnung auch im Abschnitt besonders platzsparend ausgebildet ist und dass insgesamt eine bauraumsparende oder sogar bauraumneutrale Rohranordnung ausgebildet werden kann, bei der sich Kanäle überkreuzen. Neben der runden, abgeflachten oder rechteckigen Ausgestaltung sind auch ovalierte Formgebungen denkbar. Des Weiteren ist denkbar, dass die Kanäle abschnittweise konkav oder konvex ausgebildet sind. Dabei können der erste Kanal und der zweite Kanal in den einander zugewandten Wandabschnitten kongruent ausgeformt sein. Dazu kann beispielsweise der erste Kanal in dem zugewandten Wandabschnitt konkav ausgeformt sein und der zweite Kanal in dem entsprechenden Wandabschnitt konvex. Ebenso ist denkbar, dass der erste Kanal und der zweite Kanal jeweils voneinander unterscheidende Querschnitte aufweisen.

Der erste Kanal und der zweite Kanal können verliersicher miteinander verbunden sein. Dabei kann die Verbindung materialeinheitlich und einstückig erfolgen und beispielsweise durch einen an die Kanäle angeformten Steg realisiert sein. Der Steg kann durchgehend oder abschnittsweise ausgebildet sein. Durch die Ausgestaltung als Steg ist die Rohranordnung besonders kompakt. Gemäß einer weiteren Ausgestaltung können der erste Kanal und der zweite Kanal auch formschlüssig miteinander verbunden sein. Die formschlüssige Verbindung kann durch aus den Kanälen ausgeformte Formschlusselemente oder durch eine Klipsverbindung realisiert sein, wobei die Klipsverbindung insbesondere aus einem Kanal ausgeformt sein kann. Es ist auch denkbar, dass der erste Kanal und der zweite Kanal über eine Befestigungseinrichtung miteinander verbunden sind, wobei die Befestigungseinrichtung gleichzeitig der Befestigung der Rohranordnung an einer Karosserie oder dergleichen dient.

In dem Kanalabschnitt können zwischen den Kanälen Durchbrechungen ausgebildet sein. Dadurch ist die Führung der Kanäle und die Ausgestaltung des Kreuzungsbereichs besonders flexibel und besonders einfach herstellbar.

Der erste Kanal und der zweite Kanal können strömungsleitend miteinander verbunden sein. Bei dieser Ausgestaltung kann Medium von einem Kanal in den anderen Kanal umströmen. In diesem Zusammenhang ist es insbesondere denkbar, dass in der Verbindung zwischen dem ersten Kanal und dem zweiten Kanal ein Ventil, insbesondere ein schaltbares Ventil angeordnet ist. Des Weiteren ist denkbar, dass in der Verbindung eine Drossel angeordnet ist. Die Verbindung kann als weiterer Kanal ausgebildet sein. Der weitere Kanal kann separat ausgebildet sein oder materialeinheitlich und einstückig mit dem ersten Kanal und/oder dem zweiten Kanal hergestellt sein.

In dem Grundkörper kann zumindest ein Funktionselement angeordnet sein. Das Funktionselement ist dabei vorzugsweise wenigstens einem Kanal zugeordnet. Dadurch steht das Funktionselement in unmittelbarem Kontakt mit dem Temperiermedium und kann entweder direkt den Volumenstrom des Temperiermediums beeinflussen oder direkt Zustandsdaten des Temperiermediums, wie Temperatur, Volumenstrom oder Druck, erfassen. Das Funktionselement kann auch als Kühler ausgebildet sein, der in Kontakt mit dem Temperiermedium steht und die Temperatur des Temperiermediums beeinflusst. Alternativ kann das Funktionselement auch als Heizelement ausgebildet sein.

Das Funktionselement kann aus dem Grundkörper ausgeformt sein. Dies ist insbesondere dann denkbar, wenn das Funktionselement ein passives Funktionselement ist und keinerlei bewegliche Teile aufweist. Beispielsweise kann das Funktionselement ein Drosselventil bilden. Ein Drosselventil, beziehungsweise Expansionsventil, bewirkt durch eine lokale Verengung des Strömungsquerschnitts eine Verminderung des Drucks des durchfließenden Temperiermediums und bewirkt gleichzeitig eine Expansion des Temperiermediums. Das Drosselventil ist dabei als ungeregeltes Drosselventil ausgebildet und bildet eine Einschnürung des Kanals. Dadurch, dass das Drosselventil direkt aus dem Grundkörper ausgeformt ist, ist die Rohranordnung besonders kostengünstig und einfach herstellbar. Des Weiteren ist denkbar, dass das Funktionselement eine Befestigungseinrichtung zur Befestigung der Rohranordnung an einem Bauteil bildet. Hierzu kann das Funktionselement beispielsweise als Öse, Klips oder dergleichen ausgebildet sein.

Das Funktionselement kann auch als Fluidverteilungselement ausgebildet sein. Ferner ist denkbar, dass das Funktionselement als Verbindungselement oder Konnektor ausgebildet ist. Dadurch kann die Rohranordnung dazu ausgerüstet sein, mit weiteren Komponenten eines Temperierkreislaufs verbunden zu werden. Dabei kann die Rohranordnung in ein System mit einer Vielzahl von Rohren integriert werden, wobei sich mindestens zwei der Rohre kreuzen.

Einige Ausgestaltungen der erfindungsgemäßen Rohranordnung werden nachfolgend anhand der Figuren näher erläutert. Diese zeigen, jeweils schematisch:

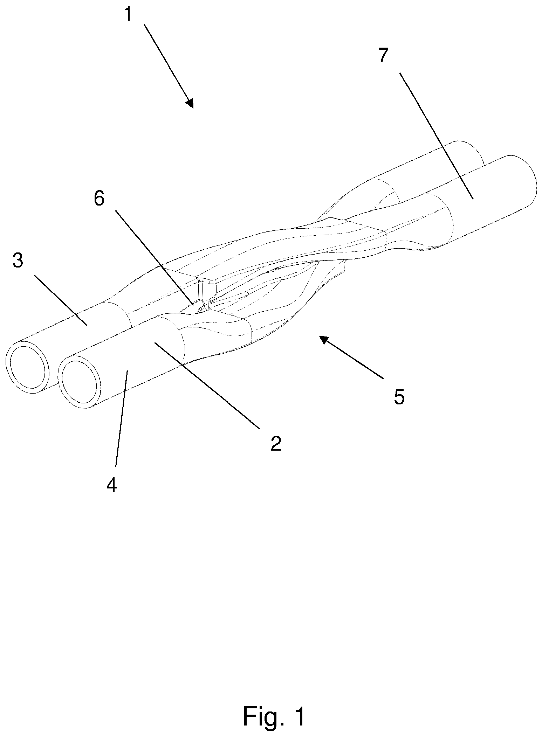

- Fig. 1: eine Rohranordnung in räumlicher Darstellung;

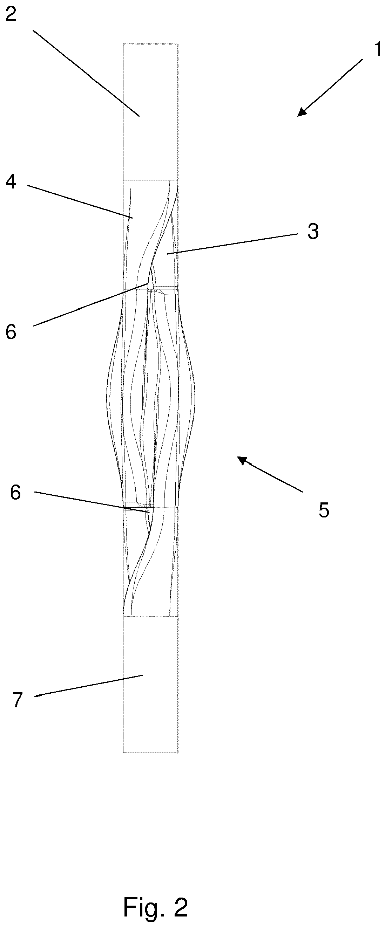

- Fig. 2: die Rohranordnung in der Draufsicht.

Die Figuren zeigen eine Rohranordnung 1 für den Transport von Temperiermedium. Die Rohranordnung 1 ist aus einem mittels Blasformen hergestellten Grundkörper 2 aus polymerem Werkstoff ausgebildet. Aus dem Grundkörper 2 sind ein erster Kanal 3 und ein zweiter Kanal 4 ausgebildet, wobei der erste Kanal 3 und der zweite Kanal 4 ein Temperiermedium aufnehmen. Der erste Kanal 3 und der zweite Kanal 4 sind derart in dem Grundkörper 2 geführt, dass sich der erste Kanal 3 und der zweite Kanal 4 in einem Abschnitt 5 überkreuzen.

In dem Abschnitt 5 sind der erste Kanal 3 und der zweite Kanal 4 bogenförmig in Form eines S-Bogens geführt.

In dem Abschnitt 5 weisen der erste Kanal 3 und der zweite Kanal 4 einen Querschnitt auf, der sich von den übrigen Querschnitten der Kanäle 3, 4 im Bereich der Rohranordnung 1 unterscheidet. In dem Abschnitt 5 sind der erste Kanal 3 und der zweite Kanal 4 abgeflacht. Im Querschnitt betrachtet sind der erste Kanal 3 und der zweite Kanal 4 im Abschnitt 5 dabei rechteckförmig ausgebildet, wobei die Eckbereiche der rechteckförmigen Kanalquerschnitte abgerundet sind. Die Abflachung des ersten Kanals 3 und des zweiten Kanals 4 erfolgt dabei derart, dass die Höhe der sich überkreuzenden Kanäle 3, 4 im Bereich des Abschnitts 5 der Höhe der nebeneinander geführten, einen runden Querschnitt aufweisenden, Kanäle 3, 4 in den Bereichen außerhalb des Abschnitts 5 entspricht. Dadurch ist die Rohranordnung 1 in Bezug auf die Höhe insgesamt bauraumneutral.

Außerhalb des Abschnitts 5 sind der erste Kanal 3 und der zweite Kanal 4 mittels Befestigungsmittel verliersicher miteinander verbunden. Alternativ können der erste Kanal 3 und der zweite Kanal 4 über einen Steg miteinander verbunden sein.

In dem Abschnitt 5 sind zwischen den Kanälen 3, 4 Durchbrechungen 6 ausgebildet.

In dem Grundkörper 2 ist ein Funktionselement 7 angeordnet. Dabei ist das Funktionselement 8 aus dem Grundkörper 2 materialeinheitlich und einstückig ausgeformt. Vorliegend bildet das Funktionselement 7 eine Drossel.

Vorliegend ist die Rohranordnung 1 Bestandteil einer Temperiereinrichtung, welche eingerichtet ist, um Komponenten der Antriebseinheit von Elektrofahrzeugen zu temperieren. Hierzu gehören neben dem Akkumulator die Leistungselektronik und die Elektromotoren. Des Weiteren ist die Temperiereinrichtung dazu eingerichtet, die Ladeelektronik und die dazugehörigen Steckverbindungen und Leitungen zu kühlen, was insbesondere im Zusammenhang mit Schnellladevorgängen vorteilhaft ist. Ferner kann die Temperiereinrichtung dazu eingerichtet sein, Komponenten der übrigen Fahrzeugelektronik zu temperieren, insbesondere zu kühlen. Derartige Komponenten sind beispielsweise Sensoren und Rechner für das autonome Fahren sowie Bordcomputer.

Alternativ kann die Rohranordnung 1 einen Bestandteil eines Klimakreislaufs einer Klimaanlage bilden, wobei die Klimaanlage als mobile Klimaanlage eines Kraftfahrzeugs ausgebildet ist.

## Patentansprüche

1. Rohranordnung (1) für den Transport von Temperiermedien, umfassend einen mittels Blasformen hergestellten Grundkörper (2), aus welchem zumindest ein erster Kanal (3) und ein zweiter Kanal (4) ausgebildet sind, wobei der erste Kanal (3) und der zweite Kanal (4) derart in dem Grundkörper (2) geführt sind, dass sich der erste Kanal (3) und der zweite Kanal (4) zumindest in einem Abschnitt (5) überkreuzen.

2. Rohranordnung nach Anspruch 1, **dadurch gekennzeichnet, dass** der erste Kanal (3) und der zweite Kanal (4) in dem Abschnitt (5) bogenförmig geführt sind.

3. Rohranordnung nach Anspruch 1 oder 2, **dadurch gekennzeichnet, dass** der erste Kanal (3) und der zweite Kanal (4) in dem Abschnitt (5) in Form eines S-Bogens geführt sind.

4. Rohranordnung nach einem der Ansprüche 1 bis 3, **dadurch gekennzeichnet, dass** der erste Kanal (3) und der zweite Kanal (4) in dem Abschnitt (5) einen Querschnitt aufweisen, der sich von den übrigen Querschnitten unterscheidet.

5. Rohranordnung nach einem der Ansprüche 1 bis 4, **dadurch gekennzeichnet, dass** der erste Kanal (3) und der zweite Kanal (4) in dem Abschnitt (5) abgeflacht sind.

6. Rohranordnung nach einem der Ansprüche 1 bis 5, **dadurch gekennzeichnet, dass** der erste Kanal (3) und der zweite Kanal (4) verliersicher miteinander verbunden sind.

7. Rohranordnung nach einem der Ansprüche 1 bis 6, **dadurch gekennzeichnet, dass** in dem Abschnitt (5) zwischen den Kanälen (3, 4) Durchbrechungen (6) ausgebildet sind.

8. Rohranordnung nach einem der Ansprüche 1 bis 7, **dadurch gekennzeichnet, dass** in dem Grundkörper (2) zumindest ein Funktionselement (7) angeordnet ist.

9. Rohranordnung nach einem der Ansprüche 1 bis 8, **dadurch gekennzeichnet, dass** zumindest ein Funktionselement (7) aus dem Grundkörper (2) ausgeformt ist.
